# EUROPÄISCHE PATENTSCHRIFT

(11) **EP 4 537 984 B1**
(45) Veröffentlichungstag und Bekanntmachung des Hinweises auf die Patenterteilung: **08.04.2026**
(21) Anmeldenummer: 23203056.9
(22) Anmeldetag: 11.10.2023
(51) Int. Cl.: B25B 1/24, B25J 13/08, B25J 15/02, G01B 7/00

(54) **GREIF- ODER SPANNVORRICHTUNG MIT MAGNETISCHER POSITIONSERFASSUNG**
GRIPPING OR CLAMPING DEVICE WITH MAGNETIC POSITION DETECTION
DISPOSITIF DE PRÉHENSION OU DE SERRAGE AVEC DÉTECTION MAGNÉTIQUE DE POSITION

(43) Veröffentlichungstag der Anmeldung: 16.04.2025
(73) Patentinhaber: SMW-electronics GmbH, 88074 Meckenbeuren (DE)
(72) Erfinder: HOFFMANN-SCHNEIDER, René, 88131 Lindau (DE)
(74) Vertreter: Christ, Niko

(56) Entgegenhaltungen:
- DE-A1- 10 026 196
- DE-A1- 102021 122 975
- US-A1- 2002 190 710
- US-B2- 11 421 975

## Beschreibung

Die vorliegende Erfindung betrifft eine Greif- oder Spannvorrichtung, umfassend ein Gehäuse mit einer Spannführung sowie wenigstens einer in dieser Spannführung verfahrbaren Spannbacke, wobei dem Gehäuse ein Positionssensor zur Erfassung einer Position der wenigstens einen Spannbacke zugeordnet ist, wobei der wenigstens einen Spannbacke eine magnetische Codierung zugeordnet ist, welche zumindest die Länge eines Spannhubs der wenigstens einen Spannbacke besitzt und über diese Länge magnetisch codierte Markierungen aufweist, welche mithilfe eines dem Gehäuse zugeordneten Positionssensors in Form eines Magnetsensors auslesbar sind.

Eine solche Greif- oder Spannvorrichtung ist bereits aus der DE 100 26 196 A1 vorbekannt. Darüber hinaus ist auf die US 2002/190710 A1 und die US 11,421,975 B2 zu verweisen.

Zudem ist die DE 10 2021 122 975 A1 vorbekannt. Es ist dort vorgesehen, dass in einer Spannbacke eine Messschräge eingearbeitet ist, welche mithilfe eines Näherungssensors abgetastet wird. In Abhängigkeit von dem Abstand des Näherungssensors von einem in seinem Blickfeld liegenden Abschnitt der Messschräge kann die Position der Spannbacke erfasst werden, weil im Zuge einer Verschiebung der Spannbacke das Blickfeld des Sensors der Messschräge entlanggleitet.

Allerdings besitzt diese Lösung einige Nachteile. Zunächst handelt es sich bei Näherungssensoren um optische Sensoren, die vergleichsweise teuer sind. Hinzu kommt, dass ein gewisser Abstand zu der Referenzfläche, zu welcher der Abstand ermittelt wird, eingehalten werden muss, um eine Verschmutzung zu vermeiden. Hierfür wird eine Distanzhülse eingesetzt, durch welche hindurch die optische Erfassung der Messschräge erfolgt.

Weniger anfällig für Verschmutzung aber vergleichsweise kostenintensiv ist auch der Gegenstand der DE 10 2021 121 686 A1, bei der mithilfe einer Spule ein elektrisches Feld erzeugt, das durch die Bewegung des Spannelements verstimmt und dessen Verstimmung ausgewertet und dadurch der Abstand ermittelt wird.

Eine ältere Möglichkeit des Vorgehens besteht darin, den Vorschub zu erfassen und ausgehend von einer Ausgangslage zu bestimmen, wie lange in eine Richtung verfahren wurde, um daraus die Position zu bestimmen. Diese Lösung ist jedoch ungenau, so dass immer wieder Referenzfahrten zur Ausgangslage vorgenommen werden müssen, um eine möglichst gute Positionserfassung zu erhalten.

Ausgehend von diesem Stand der Technik liegt der vorliegenden Erfindung die Aufgabe zu Grunde, eine Greif- oder Spannvorrichtung zu schaffen, welche unempfindlich gegen Verschmutzung ist, kostengünstig angeschafft werden kann und eine genaue Positionsbestimmung ermöglicht.

Gelöst wird diese Aufgabe durch eine Greif- oder Spannvorrichtung gemäß den Merkmalen des unabhängigen Anspruchs 1. Sinnvolle Ausgestaltungen einer solchen Vorrichtung können den sich anschließenden abhängigen Ansprüchen entnommen werden.

Vorgesehen ist insoweit eine Greif- oder Spannvorrichtung, umfassend ein Gehäuse mit einer Spannführung sowie wenigstens einer in dieser Spannführung verfahrbaren Spannbacke, wobei dem Gehäuse ein Positionssensor zur Erfassung einer Position der wenigstens einen Spannbacke zugeordnet ist. Diese ist erfindungsgemäß dadurch gekennzeichnet, dass der wenigstens einen Spannbacke eine magnetische Codierung zugeordnet ist, welche zumindest die Länge eines Spannhubs der wenigstens einen Spannbacke besitzt und über diese Länge magnetisch codierte Markierungen aufweist, welche mithilfe eines dem Gehäuse zugeordneten Positionssensors in Form eines Magnetsensors auslesbar sind.

Dadurch, dass eine magnetische Erfassung der Position aus der gegenseitigen Verschiebung zwischen magnetischer Codierung an der Spannbacke und Magnetsensor im Gehäuse vorgenommen wird, kann der Positionssensor sehr platzsparend konstruiert werden. Es ist nicht notwendig, wenngleich aber möglich, zwischen der magnetischen Codierung und dem Magnetsensor einen größeren Abstand einzuhalten. Im Zuge einer Bewegung der Spannbacke mit der magnetischen Codierung über den Magnetsensor erfasst dieser die wechselnden Markierungen innerhalb der Codierung und es kann im Rahmen einer Signalauswertung auf die Position der Spannbacke zurückgeschlossen werden. Die Auswertung des Signals des Magnetsensors kann in einer Auswerteschaltung des Magnetsensors, auf einer Sensorplatine oder einer Hauptplatine der Greif- oder Spannvorrichtung oder in einer über einen Anschluss einer Anschlussplatine anverbundene, externe Steuereinheit erfolgen.

In konkreter Ausgestaltung kann die magnetische Codierung auf einem Kunststoffband aufgebracht und diese mit der wenigstens einen Spannbacke verbunden, vorzugsweise verklebt sein. Dies ermöglicht es, bereits vorgefertigt erhältliches magnetisch codiertes Kunststoffband einzusetzen und die Kosten für die Herstellung des Positionssensors so gering wie möglich zu halten. Für eine definierte Anbringung und zuvor eine beschädigungsfreie Aufbewahrung kann das magnetisch codierte Kunststoffband auf einem Stahlband aufgebracht sein, welches dann an der wenigstens einen Spannbacke befestigt wird.

Um eine spielfreie Führung der Spannbacke in der Spannführung zu gewährleisten, kann es sinnvoll sein, wenn die wenigstens eine Spannbacke eine Vertiefung zur Aufnahme des Stahlbands aufweist. In diese Vertiefung kann dann ein korrekt abgelängtes magnetisch codiertes Kunststoffband zusammen mit dem Stahlband eingebracht, vorzugsweise eingeklebt werden.

Im Rahmen der ersten Inbetriebnahme des Positionssensors wird nach der Positionierung der magnetischen Codierung eine Referenzfahrt der wenigstens einen Spannbacke erforderlich sein. Dabei werden die Endlagen angefahren und bei Erreichen der Endlagen die von dem Magnetsensor erfassten Signale der Codierung ausgelesen. Dazwischen ist es in einer bevorzugten Ausgestaltung möglich, die magnetische Codierung eine absolute Codierung darstellt, bei der in einer Längsrichtung der Codierung jede magnetisch codierte Markierung durch den Magnetsensor eineindeutig identifizierbar ist. Dies erlaubt es, dass der Magnetsensor anhand des an einer konkreten Stelle der Codierung feststellen kann, wie weit die Spannbacke geöffnet ist, bzw. an welcher Stelle sie sich befindet.

Die alternative, jedoch weniger bevorzugte Lösung stellt eine inkrementale Codierung dar, bei der in einer Längsrichtung der magnetischen Codierung wiederkehrende, gleiche Markierungen gesetzt sind. Hier kann es erforderlich sein, nach einer Außerbetriebnahme nochmals eine Referenzfahrt durchführen zu müssen, da die einzelnen Markierungen nur im Vorbeifahren gezählt, aber nicht jede einzeln identifiziert werden können. Da eine Zählung nur von einer Endlage aus sinnvoll ist, ist eine solche inkrementale Codierung einfacher aber auch mit dem genannten Nachteil behaftet.

Es ist vorgesehen, dass die magnetische Codierung unterseitig auf der wenigstens einen Spannbacke, und der Magnetsensor unterhalb der Spannführung gegenüber der wenigstens einen Spannbacke angeordnet ist. Hierdurch liegen Codierung und Magnetsensor in einer definierten Position zueinander und die Codierung ist vor äußeren Einflüssen geschützt. Dennoch können die Spannbacken ungehindert zwischen ihren Endlagen verfahren werden. Eine nach außen auftragende Lösung wie im Stand der Technik ist damit nicht erforderlich. Vielmehr erlaubt diese Bauweise eine besonders kompakt bauende Vorrichtung.

Soweit die Spannvorrichtung nicht nur eine sondern mehrere Spannbacken vorsieht, können diese mehreren Spannbacken auch mehrere magnetische Codierungen aufweisen. Dabei ist in einer einfachsten Lösung jeder Codierung ein eigener Magnetsensor zugeordnet. In einer weiteren Ausgestaltung kann jedoch auch vorgesehen sein, dass mehrere benachbarte Codierungen gleichzeitig von einem gemeinsamen Magnetsensor ausgelesen werden. Dies ermöglicht eine redundante Auswertung mehrerer Codierungen, so dass bei geringfügigen Abweichungen ein Mittel zwischen den aus den beiden Codierungen ermittelten Positionen bestimmt werden kann.

Besonders bevorzugt sind jedoch, wenn mehrere Spannbacken vorgesehen sind, diese aufgrund einer mechanischen Verzahnung miteinander synchronisiert. In einem solchen Fall ist es lediglich nötig, dass nur an einer Spannbacke eine magnetische Codierung vorgesehen ist. Wird eine Spannbacke motorisch angetrieben, so kann aufgrund der Verzahnung die wenigstens eine andere Spannbacke in Gegenrichtung oder allgemein gleichartig auf ein Werkstück zu oder von diesem weg bewegt werden, ohne dass eine Wegabweichung entstehen kann.

Die vorstehend beschriebene Erfindung wird im Folgenden anhand eines Ausführungsbeispiels näher erläutert.

Es zeigen
- Figur 1: eine Greif- oder Spannvorrichtung mit zwei gegenläufigen Spannbacken in perspektivischer Darstellung,
- Figur 2: die Greif- oder Spannvorrichtung gemäß Figur 1 in einer seitlichen Querschnittsdarstellung, sowie
- Figur 3: die Greif- oder Spannvorrichtung gemäß Figur 2 in einer Längsschnittdarstellung wie in Figur 2 angezeigt.

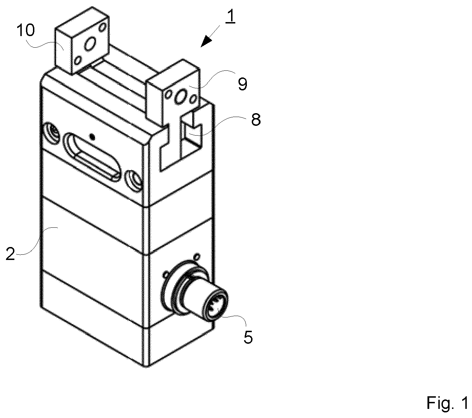

Figur 1 zeigt eine Greif- oder Spannvorrichtung 1, welche beispielsweise an einem Robotergreifer einer Werkzeugmaschine eingesetzt werden kann. Die Vorrichtung 1 ist von einem Gehäuse 2 umgriffen, in welchem eine Spannführung 8 vorgesehen ist. In dieser Spannführung 8 sind zwei Spannbacken 9 und 10 vorgesehen, die entlang der Spannführung 8 verfahrbar sind. Die Spannführung 8 ist in Form einer T-förmig hinterschnittenen Nut gebildet, welche von einer Oberseite des Gehäuses 2 her in dieses eingebracht ist. Jeder Spannbacke 9 und 10 ist ein halbes 'T' zur Führung zugeordnet, wobei diese Führungen aneinander so vorbeilaufen, dass daran befestigte Spannfinger flächig aufeinander zu beweglich sind. Die Verstellung der Spannbacken 9 und 10 aufeinander zu und voneinander weg erfolgt elektromotorisch, wobei über einen Anschluss 5 sowohl elektrische Energie bereitgestellt als auch Stellbefehle herangeführt und Messwerte an eine Steuereinheit übermittelt werden können.

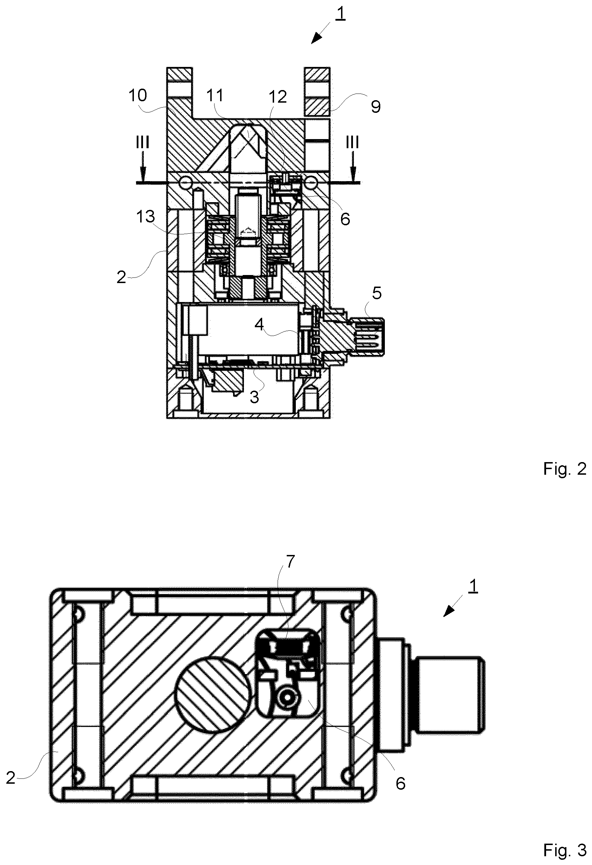

Wie in Figur 2 deutlich wird, ist der Anschluss 5 über eine Anschlussplatine 4 an einer Hauptplatine 3 angeschlossen, wo die Stellbefehle der hier nicht gezeigten Steuereinheit in Stellbefehle an einen Antrieb 13 generiert werden. Der Antrieb 13 betätigt über eine Verzahnung 11 die beiden Spannbacken 9 und 10, welche auf diese Weise zwangsläufig synchron zueinander betrieben werden. Dadurch ist es ausreichend, dass lediglich der ersten Spannbacke 9 eine magnetische Codierung 12 in Form eines Kunststoffbandes zugeordnet ist, welches an der Unterseite der ersten Spannbacke 9, einem Magnetsensor 7 auf einer Sensorplatine 6 zugewandt, aufgeklebt ist. Während die Spannbacke 9 über den Magnetsensor 7 in Richtung der Spannführung 8 verfahren wird, liest der Magnetsensor 7 die magnetische Codierung 12 aus und kann im Fall einer absoluten Codierung an jeder einzelnen Markierung die Position der ersten Spannbacke 9 bezüglich des Gehäuses 2 ablesen, woraus sich aufgrund der Verzahnung 11 auch die Position der zweiten Spannbacke 10 analog ergibt. Die Lagerung des Magnetsensors 7 auf der Sensorplatine 6 innerhalb des Gehäuses 2 der Vorrichtung ist in Figur 3 nochmals gezeigt. Die Sensorplatine 6 sitzt außermittig in dem Gehäuse 2, so dass der Magnetsensor 7 die an lediglich einer ersten Spannbacke 9 befestigte magnetische Codierung 12 optimal auslesen kann.

Vorstehend beschrieben ist somit eine Greif- oder Spannvorrichtung, welche unempfindlich gegen Verschmutzung ist, kostengünstig angeschafft werden kann und eine genaue Positionsbestimmung ermöglicht.

### BEZUGSZEICHENLISTE

- 1: Greif- oder Spannvorrichtung
- 2: Gehäuse
- 3: Hauptplatine
- 4: Anschlussplatine
- 5: Anschluss
- 6: Sensorplatine
- 7: Magnetsensor
- 8: Spannführung
- 9: erste Spannbacke
- 10: zweite Spannbacke
- 11: Verzahnung
- 12: magnetische Codierung
- 13: Antrieb

## Patentansprüche

1. Greif- oder Spannvorrichtung, umfassend ein Gehäuse (2) mit einer Spannführung (8) sowie wenigstens einer in dieser Spannführung (8) verfahrbaren Spannbacke (9, 10), wobei dem Gehäuse (2) ein Positionssensor zur Erfassung einer Position der wenigstens einen Spannbacke (9, 10) zugeordnet ist, wobei der wenigstens einen Spannbacke (9, 10) eine magnetische Codierung (12) zugeordnet ist, welche zumindest die Länge eines Spannhubs der wenigstens einen Spannbacke (9, 10) besitzt und über diese Länge magnetisch codierte Markierungen aufweist, welche mithilfe eines dem Gehäuse (2) zugeordneten Positionssensors in Form eines Magnetsensors (7) auslesbar sind, **dadurch gekennzeichnet, dass** die magnetische Codierung (12) unterseitig auf der wenigstens einen Spannbacke (9, 10), und der Magnetsensor (7) unterhalb der Spannführung (8) gegenüber der wenigstens einen Spannbacke (9, 10) angeordnet ist.

2. Greif- oder Spannvorrichtung gemäß Anspruch 1, **dadurch gekennzeichnet, dass** die magnetische Codierung (12) auf einem Kunststoffband aufgebracht und diese mit der wenigstens einen Spannbacke (9, 10) verbunden, vorzugsweise verklebt ist.

3. Greif- oder Spannvorrichtung gemäß Anspruch 2, **dadurch gekennzeichnet, dass** das magnetisch codierte Kunststoffband auf einem Stahlband aufgebracht ist, welches an der wenigstens einen Spannbacke (9, 10) befestigt ist.

4. Greif- oder Spannvorrichtung gemäß Anspruch 3, **dadurch gekennzeichnet, dass** die wenigstens eine Spannbacke (9, 10) eine Vertiefung zur Aufnahme des Stahlbands aufweist.

5. Greif- oder Spannvorrichtung gemäß einem der vorhergehenden Ansprüche, **dadurch gekennzeichnet, dass** die magnetische Codierung (12) eine absolute Codierung darstellt, bei der in einer Längsrichtung der Codierung (12) jede magnetisch codierte Markierung durch den Magnetsensor (7) eineindeutig identifizierbar ist.

6. Greif- oder Spannvorrichtung gemäß einem der Ansprüche 1 bis 4, **dadurch gekennzeichnet, dass** die magnetische Codierung (12) eine inkrementale Codierung umfasst, bei der in einer Längsrichtung der magnetischen Codierung (12) wiederkehrende, gleiche Markierungen gesetzt sind.

7. Greif- oder Spannvorrichtung gemäß einem der vorhergehenden Ansprüche, **dadurch gekennzeichnet, dass** mehrere Spannbacken (9, 10) vorgesehen sind und mehrere magnetische Codierungen (12) aufweisen.

8. Greif- oder Spannvorrichtung gemäß Anspruch 7, **dadurch gekennzeichnet, dass** mehrere magnetische Codierungen (12) gleichzeitig von einem gemeinsamen Magnetsensor (7) auslesbar sind.

9. Greif- oder Spannvorrichtung gemäß einem der Ansprüche 1 bis 6, **dadurch gekennzeichnet, dass** mehrere Spannbacken (9, 10) vorgesehen sind, welche aufgrund einer mechanischen Verzahnung (11) miteinander synchronisiert sind und lediglich an einer Spannbacke (9, 10) eine magnetische Codierung (12) vorgesehen ist.

## Claims

1. Clamping or gripping device comprising a housing (2) with a clamping guide (8) and at least one clamping jaw (9, 10) movable in this clamping guide (8), wherein a position sensor for detecting a position of the at least one clamping jaw (9, 10) is associated with the housing (2), wherein the at least one clamping jaw (9, 10) has a magnetic coding (12) associated with it, which has at least the length of a clamping stroke of the at least one clamping jaw (9, 10) and has magnetically coded markings over this length, which can be read out by means of a position sensor in the form of a magnetic sensor (7) assigned to the housing (2),
**characterised in that** the magnetic coding (12) is arranged on the underside of the at least one clamping jaw (9, 10), and the magnetic sensor (7) is arranged below the clamping guide (8) opposite the at least one clamping jaw (9, 10).

2. Gripping or clamping device according to claim 1, **characterised in that** the magnetic coding (12) is applied to a plastic strip and this is connected, preferably glued, to the at least one clamping jaw (9, 10).

3. Gripping or clamping device according to claim 2, **characterised in that** the magnetically coded plastic strip is applied to a steel strip which is attached to the at least one clamping jaw (9, 10).

4. Gripping or clamping device according to claim 3, **characterised in that** the at least one clamping jaw (9, 10) has a recess for receiving the steel strip.

5. Gripping or clamping device according to one of the preceding claims, **characterised in that** the magnetic coding (12) is an absolute coding in which each magnetically coded marking can be uniquely identified by the magnetic sensor (7) in a longitudinal direction of the coding (12).

6. Gripping or clamping device according to one of claims 1 to 4, **characterised in that** the magnetic coding (12) comprises an incremental coding in which recurring, identical markings are set in a longitudinal direction of the magnetic coding (12).

7. Gripping or clamping device according to one of the preceding claims, **characterised in that** several clamping jaws (9, 10) are provided and have several magnetic codings (12).

8. Gripping or clamping device according to claim 7, **characterised in that** a plurality of magnetic codes (12) can be read simultaneously by a common magnetic sensor (7).

9. Gripping or clamping device according to one of claims 1 to 6, **characterised in that** several clamping jaws (9, 10) are provided, which are synchronised with each other by means of a mechanical interlocking mechanism (11), and a magnetic code (12) is provided on only one clamping jaw (9, 10).

## Revendications

1. Dispositif de préhension ou de serrage comprenant un boîtier (2) avec un guide de serrage (8) ainsi qu'au moins une mâchoire de serrage (9, 10) mobile dans ce guide de serrage (8), un capteur de position étant associé au boîtier (2) pour détecter la position de la au moins une mâchoire de serrage (9, 10), un codage magnétique (12) étant associé à la au moins une mâchoire de serrage (9, 10), lequel codage magnétique (12) s'étend au moins sur la longueur d'une course de serrage de la au moins une mâchoire de serrage (9, 10) et comporte, sur cette longueur, des repères codés magnétiquement qui peuvent être lus à l'aide d'un capteur de position associé au boîtier (2) sous la forme d'un capteur magnétique (7),
**caractérisé en ce que** le codage magnétique (12) est disposé sur la face inférieure de la au moins une mâchoire de serrage (9, 10), et le capteur magnétique (7) est disposé sous le guide de serrage (8) en face de la au moins une mâchoire de serrage (9, 10).

2. Dispositif de préhension ou de serrage selon la revendication 1, **caractérisé en ce que** le codage magnétique (12) est appliqué sur une bande en plastique et relié, de préférence collé, à la au moins une mâchoire de serrage (9, 10).

3. Dispositif de préhension ou de serrage selon la revendication 2, **caractérisé en ce que** la bande en plastique à codage magnétique est appliquée sur une bande en acier qui est fixée à la au moins une mâchoire de serrage (9, 10).

4. Dispositif de préhension ou de serrage selon la revendication 3, **caractérisé en ce que** la au moins une mâchoire de serrage (9, 10) présente un renfoncement destiné à recevoir la bande en acier.

5. Dispositif de préhension ou de serrage selon l'une des revendications précédentes, **caractérisé en ce que** le codage magnétique (12) est un codage absolu dans lequel, dans le sens longitudinal du codage (12), chaque marquage codé magnétiquement peut être identifié de manière univoque par le capteur magnétique (7).

6. Dispositif de préhension ou de serrage selon l'une des revendications 1 à 4, **caractérisé en ce que** le codage magnétique (12) comprend un codage incrémental dans lequel des repères identiques et récurrents sont placés dans une direction longitudinale du codage magnétique (12).

7. Dispositif de préhension ou de serrage selon l'une des revendications précédentes, **caractérisé en ce que** plusieurs mâchoires de serrage (9, 10) sont prévues et comportent plusieurs codages magnétiques (12).

8. Dispositif de préhension ou de serrage selon la revendication 7, **caractérisé en ce que** plusieurs codages magnétiques (12) peuvent être lus simultanément par un capteur magnétique commun (7).

9. Dispositif de préhension ou de serrage selon l'une des revendications 1 à 6, **caractérisé en ce que** plusieurs mâchoires de serrage (9, 10) sont prévues, lesquelles sont synchronisées entre elles grâce à un engrenage mécanique (11) et un codage magnétique (12) est prévu uniquement sur une mâchoire de serrage (9, 10).
